Europäisches Patentamt

European Patent Office

Office européen des brevets

(11) Veröffentlichungsnummer: **0 230 579**

**A1**

(12) **EUROPÄISCHE PATENTANMELDUNG**

(21) Anmeldenummer: 86116939.9

(22) Anmeldetag: 05.12.86

(51) Int. Cl.⁴: **B01D 46/24** , B01D 39/14

(30) Priorität: 24.01.86 DE 3602154
24.01.86 DE 3602153

(43) Veröffentlichungstag der Anmeldung:
05.08.87 Patentblatt 87/32

(84) Benannte Vertragsstaaten:
AT DE FR GB IT NL SE

(71) Anmelder: MAN Technologie GmbH
Dachauer Strasse 667
D-8000 München 50(DE)

(72) Erfinder: Wenner, Ulrich
Immenweg 26
D-3110 Uelzen 1(DE)
Erfinder: Herrmann, Werner
Südliche Auffahrtsallee 62
D-8000 München 19(DE)
Erfinder: Baumann, Robert
Birkenweg 2
D-8059 Walpertskirschen(DE)

(54) Partikelfilter für Abgase.

(57) Bei aus Wickelkörpern hergestellten Partikelfiltern für Abgase wird die Kombination unterschiedlicher Fasern vorgeschlagen. Die wesentliche
Filterwirkung wird durch eine Grundfaser (110, 120)
aus sehr dünnen Elementarfäden (140)
übernommen, die aus Keramik, Glas usw. bestehen
können, während Metall-, insbesondere Stahlfasern -
(130) im und/oder um den Wickelkörper vorgesehen
werden, die die Filterwirkung unterstützen und
gleichzeitig die erforderliche Steifigkeit des Wickelkörpers (100) erbringen.

Fig.4

## Partikelfilter für Abgase

Die Erfindung bezieht sich auf einen Partikelfilter für Abgase, bestehend aus einem Wickelkörper aus temperaturbeständigen Fasern.

Unter den verschiedenen Filterkonstruktionen, wie aus Keramikschaum, Fasermatten, Drahtgestrick und als Wickelkörper haben die letzteren gegenüber den vorherstehenden Varianten den Vorteil, daß das Verhältnis der Filterbaugröße zur Filterwirkung günstiger, d.h. geringer ist als bei Filtern anderer Konstruktionen.

Um diesen Vorteil besonders deutlich zu machen, müssen Fasern mit Elementarfasern möglichst geringer Faserdicke im Bereich von einigen µm verwendet werden. Weiterhin ist auf eine möglichst lockere Bewicklung zu achten, die eine Tiefenfiltrierung von Partikeln erlaubt.

Ein derartiger Wickelkörper besitzt aber keine ausreichende Steifigkeit, die einen Einsatz des Wickelkörpers als Filter ohne Stützeinrichtung erlaubt. Aus Wickelkörpern bestehende Filter werden daher, wie aus der DE-PS 30 07 642 bekannt, auf Stützrohren aufgewickelt, die mit Durchgangsöffnungen versehen sind.

Bei der bekannten Einrichtung strömen die Abgase im Betrieb des Filters in radialer Richtung in das Filterrohr ein und verlassen es in axialer Richtung. Die im Abgas enthaltenen Partikel werden dabei am Wickelkörper festgehalten. Es hat sich jedoch gezeigt, daß aufgrund der unterschiedlichen Strömungskonfigurationen zwischen Filtermaterial und Stützkörper sich die Abgase unregelmäßig ablagern. Der Abscheidegrad des Filters wird hierdurch stark beeinträchtigt.

Der Erfindung liegt die Aufgabe zugrunde, einen Filter der eingangs genannten Art dahingehend zu verbessern, daß die dem Filtermaterial eigene Filterwirkung möglichst voll genutzt werden kann.

Die Aufgabe wird erfindungsgemäß durch die im Anspruch 1 gekennzeichneten Merkmale gelöst.

Hierbei dient ein Teil der Fasern, nämlich die Hilfsfasern, neben der Funktion als Filter, als Gerüst für den Wickelkörper, so daß von Stützkörpern abgesehen werden kann. Es entfällt damit jede Beeinträchtigung des Abscheidegrades des Filters.

Durch eine damit erreichbare homogene Struktur baut sich im Betrieb ein homogenes Strömungsfeld auf, das eine gleichmäßige Ablagerung der Partikel durch den gesamten Filter ermöglicht.

Ein weiterer Vorteil des erfindungsgemäßen Filters liegt darin, daß ein einheitlicher Filter herstellbar ist, der je nach Bedarf entweder in der einen oder in der anderen Richtung durchströmbar ist.

Als Grundfasern können Rovings oder Garne aus Keramik, Quarz, Silizium, Glas oder ähnlichen temperaturbeständigen Materialien sein, wobei die Elementarfäden der Rovings oder Garne äußerst kleine Querschnitte haben können, so daß eine Erhöhung der Wirkfläche des Filters durch die Wahl entsprechend dünner Elementarfäden bewirkt werden kann.

Die Elementarfäden der Grundfasern haben vorzugsweise einen Durchmesser von höchstens 10 µm, vorzugsweise unter 7 µm.

Als Hilfsfaser kann vorzugsweise Stahldraht verwendet werden, der je nach Art der Verwendung bzw. Mengenverhältnis im Filterkörper einen Durchmesser von 0,1 bis 0,7 mm hat. Die Drahtdicke verhält sich dabei umgekehrt proportional zum Verhältnis der Drahtmenge zur Grundfasermenge im Filterkörper. Die Grundfasern und die Hilfsfasern können nach verschiedenen Mustern kombiniert werden.

Gemäß einer Ausführung der Erfindung ist der im wesentlichen aus Grundfasern bestehende Filterkörper mit den Hilfsfasern versetzt. Dieses kann dadurch geschehen, daß die Hilfsfasern zusammen mit den Grundfasern in einem Arbeitsgang gewickelt werden, in dem je nach gewünschtem Mengenverhältnis eine Hilfsfaser und mehrere Grundfaserstränge gleichzeitig verwickelt werden. Dadurch ergibt sich eine gleichmäßige Verteilung von Hilfsfasern innerhalb des Filterkörpers. Es ist aber auch möglich, die Verteilung der Hilfsfasern beliebig zu wählen, indem zum Beispiel an den Außenschichten mehr Hilfsfasern eingebracht werden als in der Innenschicht.

Gemäß einer weiteren Ausgestaltung der Erfindung befinden sich die Hilfsfasern im wesentlichen an den Oberflächen des Filterkörpers, wobei zwischen den beiden Lagen mit Hilfsfasern vorwiegend Grundfasern vorgesehen sind. Hierbei lassen sich die Hilfsfasern entweder wickeln oder in der Form eines Netzwerkes verwenden.

Diese Ausführung hat den Vorteil, daß die Hilfsfasern die Grundfasern verankern, die nämlich aufgrund ihres reduzierten Querschnittes und gegebenenfalls aufgrund ihrer Porosität zumindest an der Oberfläche reißen können.

Selbstverständlich ist es auch möglich, beide Ausführungen zu kombinieren, d.h. Hilfsfasern an den Oberflächen des Filterkörpers vorzusehen und zusätzlich Hilfsfasern durch den Wickelaufbau der Grundfasern durchzuziehen.

Unabhängig vom jeweils gewählten Muster wird die erforderliche Steifigkeit durch entsprechende Wahl der eingebrachten Menge bzw. der Dicke der Hilfsfasern bestimmt derart, daß der lediglich aus Grundfasern und Hilfsfasern bestehende Filterkörper für sich alleine, d.h. ohne Stützelemente einsatzfähig ist. Die Hilfsfasern sind dabei ein integraler Bestandteil des Filterkörpers bzw. des Filtermaterials.

Der erfindungsgemäße Filter kann jede geometrische Form annehmen, die im Wickelverfahren herstellbar ist. So ist es möglich, den Filter sowohl platten-als auch rohrförmig auszubilden.

Nach einer weiteren Ausgestaltung der Erfindung sind die Fasern im Wickelkörper sich kreuzend gewickelt, wobei insbesondere durch Verwendung eines offenen Wickelvorganges Zwischenräume zwischen Fasersträngen geschaffen werden können, die dem Wickelkörper eine für die Durchströmung und Umlenkung des zu reinigenden Gases erforderliche Porosität verleihen. Hierdurch können die Partikel zum Teil durch unterschiedliche Lagen strömen und sich innerhalb des Wickelkörpers ablagern, wodurch eine Tiefenfilterwirkung erreicht wird.

Dieser Effekt läßt sich durch Maßnahmen verstärken, die die Verknotungen von sich kreuzenden Faser-bzw. Garnsträngen vermindern. Es ist ferner vorteilhaft, wenn beim Wickeln des Filters zumindest die Grundfasern locker geführt werden, um .eine entsprechende Porosität in den Filter einzubringen, die eine Tiefenfilterwirkung herbeiführt.

Die Erfindung erstreckt sich auf ein Verfahren zur Herstellung eines Partikelfilters, das durch die Merkmale aus den Ansprüchen 12 -14 gekennzeichnet ist. Unter Fasersträngen sind die Grundfasern und die Hilfsfasern zu verstehen.

Beim Wickeln des Filters werden Lücken vorgesehen, die das Eindringen von Partikeln mit dem Gas in die inneren Bereiche des Filters ermöglichen. Auf diese Weise wirkt nicht nur die Oberfläche, sondern das gesamte Filtervolumen als Ablagerungsfläche für die im Gas enthaltenen Partikeln. Die Lücken müssen dabei so gestaltet sein, daß die Abgase mehrfache Umlenkungen erfahren und auf diese Weise Partikel, die nicht an der Oberfläche bzw. den ersten Schichten festgehalten wurden, in tieferen Schichten festgehalten werden können.

Die Porosität wird vorzugsweise durch gleichzeitiges Wickeln mehrerer Faserstränge erreicht, die mit Abstand zueinander in Kreuzlagen gewickelt werden. Hierbei werden die Fasern einer nächsten Lage über mehrere Fasern der vorhergehenden Lage gelegt, ohne Knotenpunkte zu erzeugen. Das hat den Vorteil, daß eine Zwischenlage die beiden angrenzenden, sich kreuzenden Faserlagen in einem Abstand auseinanderhalten kann, der in etwa der Faserstrangdicke entspricht. Dieses wird in einer fertigungstechnisch einfachen Art durch die Verwendung eines Ringfadenauges erreicht. Die Zahl der mit dem Ringfadenauge geführten Faserstränge richtet sich nach dem Durchmesser des Wickelkörpers und nach dem gewünschten Abstand zwischen den Fasersträngen. Jede Wickellage wird dabei ausschließlich aus nebeneinanderliegenden Fasern, d. h. ohne Verknotungen bestehen.

Die Fasern verschiedener Lagen gleicher Orientierung werden dabei auf Lücke gewickelt, um Porenkanäle zu vermeiden, die geradlinig die Wickelkörperwandung durchqueren. Es entstehen somit Zickzackkanäle, durch die das Gas mit Partikeln strömen kann und dabei sich immer wieder Partikel ablagern können.

Zum Beispiel bei rohrförmigen Filtern können mehrere Filter in einem Arbeitsgang gewickelt werden, indem ein entsprechend langer Filterkörper gewickelt und hintereinander in die Filterkörper aufgetrennt wird. Arbeitszeit und Materialverlust werden dabei reduziert.

Die Faserstränge können aus vielen dünnen Elementarfäden zusammengefaßte Rovings sein, wobei der Querschnitt eines Elementarfadens vorzugsweise unter 10 um dick ist. Ein derartiger Faserstrang hat den Vorteil, daß durch die Vielzahl von sehr dünnen Elementarfäden die Ablagerungsfläche für die Partikel stark erhöht wird. Deren Wirkung wird insbesondere dann spürbar, wenn die Faser locker gewickelt ist, so daß das Gas mit kleinen Partikeln auch durch Faserstränge strömen kann. Bei rohrförmigen Filtern wirkt sich in dieser Hinsicht auch ein größerer Durchmesser vorteilhaft aus.

Es ist aber auch möglich, als Faserstränge ein Garn aus dünnen, verdrillten Elementarfäden zu verwenden. Das Garn wird auch im bewickelten Zustand annähernd seinen runden Querschnitt behalten, so daß die Bildung der Strömungskanäle zwischen Fasersträngen und Faserlagen besser zum Tragen kommt und durch die Wahl der Garndicke reproduzierbar bestimmt werden kann.

Die Hilfsfasern werden mit den übrigen Fasern mitgewickelt, so daß der Filterkörper gleichmäßig mit Hilfsfasern durchsetzt ist. Es ist aber auch möglich, die Hilfsfasern entweder gewickelt oder zu einem Netzwerk verarbeitet, vorzugsweise an den Oberflächen des Filterkörpers zu versehen. In jedem Fall dient das Hilfsfaserwickel-oder Netzwerk gleichzeitig als Filtermaterial, auf dem sich die Partikel genauso wie bei den übrigen Fasern ablagern können.

Die Erfindung wird nachfolgend anhand von in der Zeichnung schematisch dargestellten Ausführungsbeispielen näher erläutert. Es zeigen:

Fig. 1 ein erstes Beispiel,
Fig. 2 ein Detail aus Fig. 1,
Fig. 3 und 4 je ein zweites Beispiel,
Fig. 5 ein Detail aus Fig. 4 und
Fig. 6 ein viertes Ausführungsbeispiel.

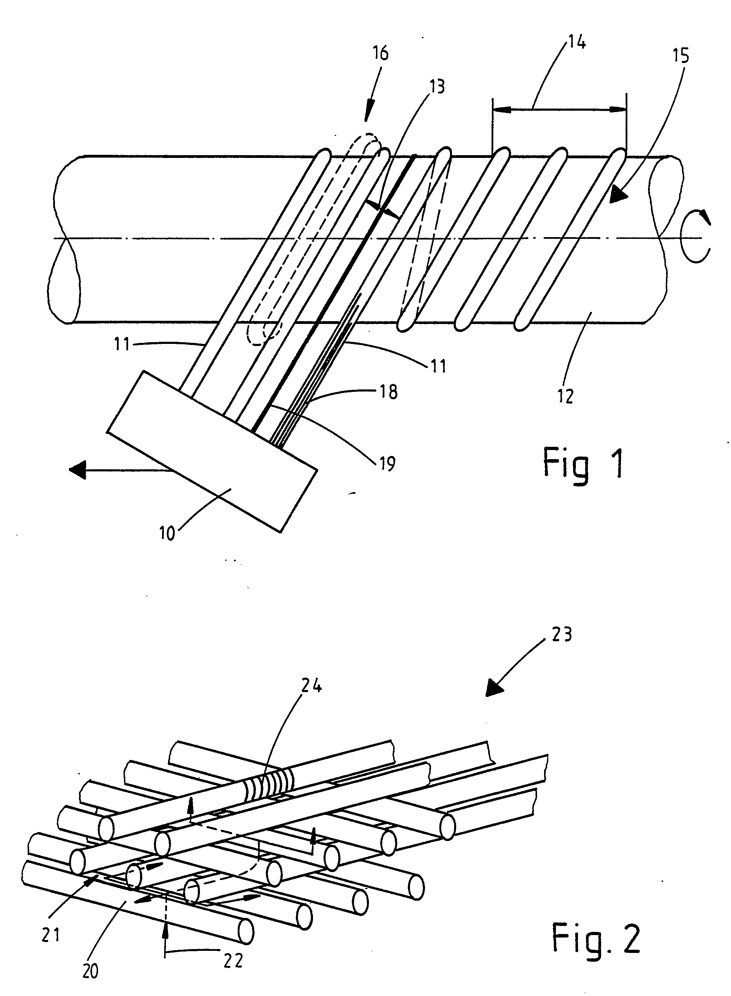

Das Wickeln der Filterkörper kann mit jeder in der Wickeltechnik bekannten Methode durchgeführt werden. In Fig. 1 ist beispielsweise ein Fadenauge (10) mit drei nebeneinander angeordneten Fasersträngen (11) gezeigt, die um einen sich um die Achse drehenden Dorn (12) gewickelt werden. Die Faserstränge (11) werden dabei jeweils in Abständen (13) gehalten, so daß pro Wicklung eine Breite (14) bestrichen wird, die größer ist als die Summe der Durchmesser der drei Fasern.

Die erste Wickellage (15) ist in etwa im Winkel von 60° gelegt. Eine zweite Lage wird über Kreuz mit minus 60° gelegt. Eine dritte Lage kann dann wiederum eine andere Orientierung erhalten, die weder der ersten noch der zweiten Lage entspricht. Wenn die dritte Lage auch 60° wie die erste Lage gelegt werden soll, dann werden die Faserstränge jeweils auf Luke gegenüber der vorhergehenden auf Luke gleichorientierten Lage gelegt, wie es gestrichelt unter der Bezugsziffer (16) dargestellt ist.

Das Ergebnis eines derartigen Wickelmusters ist in Fig. 2 als stark vergrößerter Ausschnitt dargestellt, wobei zur Vereinfachung der Darstellung die Fasern unterschiedlicher Orientierungen sich . im rechten Winkel kreuzend gezeichnet sind. Durch die im Abstand und auf Luke gewickelten Fasern - (20) bilden sich Porenkammern (21), die alle untereinander miteinander verbunden sind, aber keine die Filterwandung geradlinig durchquerende Öffnungen bilden. Ein Abgasstrom (22) wird daher zickzackförmig innerhalb dieser Kammern (21) bzw. Kanäle geführt, die einerseits groß genug sind, um die im Gas (22) enthaltenen Partikeln durchzulassen und andererseits klein genug sind, um diese Partikeln zu deren Weg durch den Filter - (23) mit den Fasern (20) festhalten zu können. Die wirksame Filtrieroberfläche erstreckt sich somit auf die Oberfläche sämtlicher Faserstränge (11 bzw. 20) des Filterkörpers.

Ein Faserstrang (11) besteht aus mehreren Elementarfäden (18), die gebündelt zu einem Faserstrang oder Roving (11) zusammengefaßt sind. Im Beispiel gemäß Fig. 2 bestehen die Faserstränge - (20) aus zu einem Garn verdrillten Elementarfäden (24).

Bei einer lockeren Fadenführung sind die Elemenarfäden (18 bzw. 24) nicht so dicht aneinandergepreßt, so daß Gase (22) auch durch einen Faserstrang (11 bzw. 20) hindurchströmen können und damit kleinere Partikel mit hineinziehen kann, die an Elementarfäden festgehalten werden. Hiermit erweitert sich die Filterwirkfläche auf die Oberfläche der Elementarfäden.

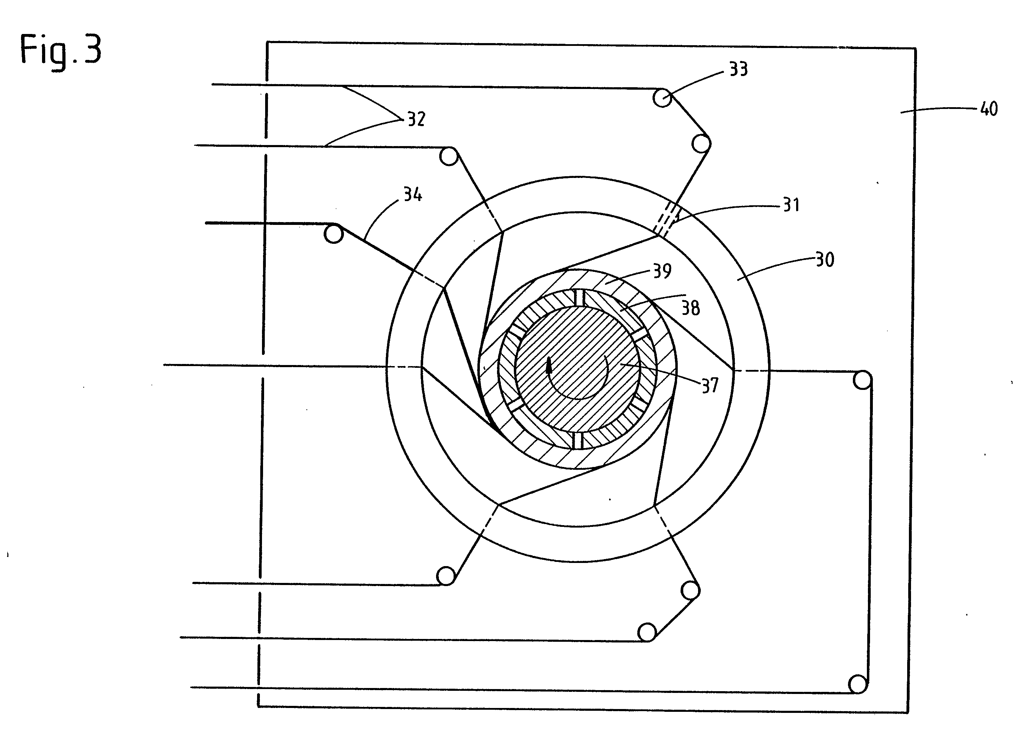

In Fig. 3 ist ein Beispiel gezeigt, bei dem ein rohrförmiger Filter (39) unter Verwendung eines Ringfadenauges (30) gewickelt wird. Das Ringfadenauge (30) hat sechs Bohrungen (31), durch die jeweils ein Faserstrang (32) geführt wird, die über Lenkrollen (33) geleitet sind.

Die Zahl der gemeinsam zu wickelnden Faserstränge (32) richtet sich nach dem gewünschten Abstand (13, Fig. 1) zwischen den Faserstränge (32) am Wickelkörper (39) und dem Durchmesser des Wickelkörpers (39).

Der Dorn besteht aus einem Dornkern (37), um den Hülsensegmente (38) herumgelegt sind. Die Faserstränge (32) werden auf die Hülsensegmente (38) aufgewickelt, indem der Dorn (37, 38) in Pfeilrichtung gedreht und das Ringfadenauge (30) in axialer Richtung verschoben wird.

Über die resultierende Geschwindigkeit, die sich aus der Kombination der Drehgeschwindigkeit des Dornes und des Vorschubes des Fadenauges ergibt, wird der Wickelwinkel bestimmt. Die Winkel werden so gewählt, daß die Fasern jeder Lage sich mit den Fasern der anliegenden Fasern kreuzen.

Ein weiterer zu beachtender Parameter ist der Faserzug während des Wickelvorganges. Je lockerer die Faser bzw. der Faserstrang geführt wird, desto weicher ist der Wickelkörper und desto lockerer liegt der Faserstrang und damit die Elementarfäden. Bei lockerem Faserzug flachen sich dagegen die Faserstränge im Querschnitt ab, so daß auch die Kammern (21) flacher werden.

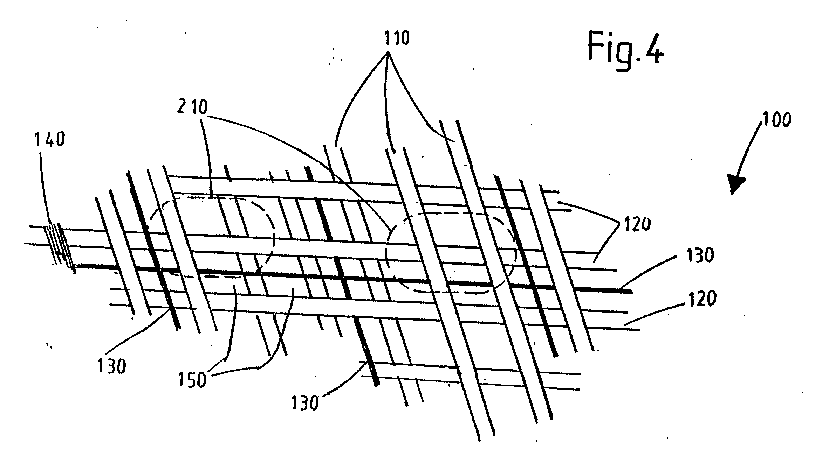

In Fig. 4 ist ein als Wickelkörper ausgebildeter, im Querschnitt dargestellter plattenförmiger Filter - (100) gezeigt, der aus Grundfasern (110 und 120) aus Keramik, Glas oder ähnlichem temperaturbeständigen Material und aus Hilfsfasern (130) aus Stahl oder einem anderen temperaturbeständigen Metall besteht. Die Grundfasern (110 und 120) sind Faserstränge, die jeweils mehrere Elementarfäden (140) mit sehr kleinem Durchmesser im Bereich von einigen μm enthalten. Die Elementarfäden - (140) können dabei einen Roving bildend parallel zueinander angeordnet oder zu einem Garn verdrillt sein.

Die Hilfsfasern (130) sind Metalldrähte, die während des Wickelvorganges der Grundfasern - (110 und 120) mitgewickelt werden und dadurch den Filter (100) in allen Schichten durchsetzen. Durch Richtungswechsel der Fasern (110 bis 130) in unterschiedlichen Lagen wird in Verbindung mit einer offenen Wicklungstechnik , (d. h., daß nebeneinanderliegende Fasern (110 bzw. 120) mit Abständen (150) voneinander gelegt werden), eine Porosität im Wickelkörper erreicht, durch die der Filter (100) eine Tiefenfilterwirkung erhält.

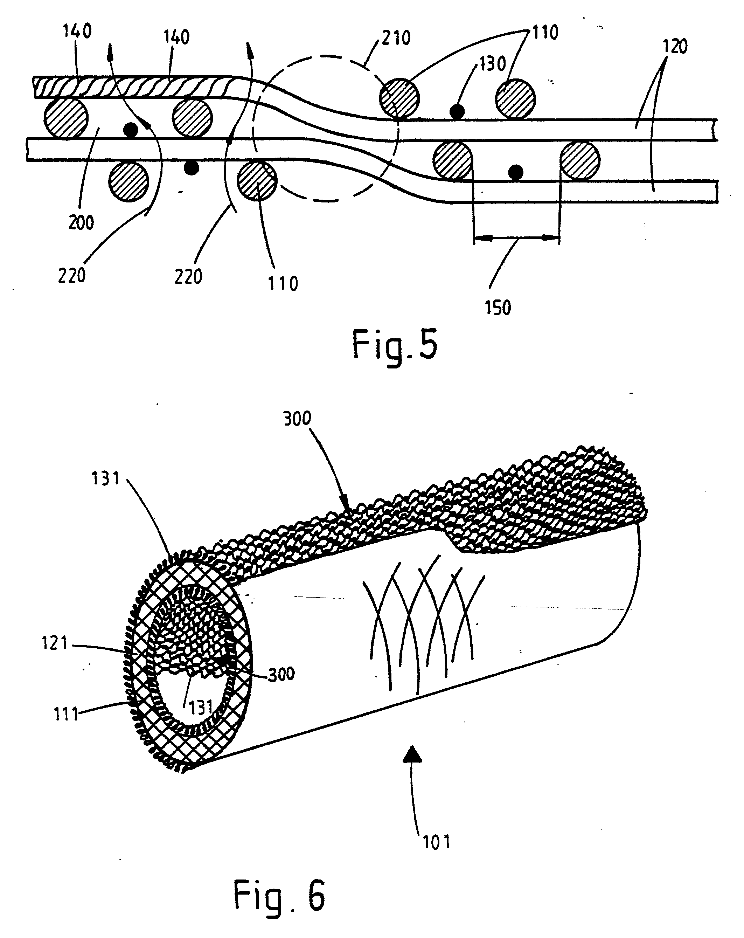

Die Entstehung der Porenkammern kann anhand der Fig. 5 verdeutlicht werden. Zur Vereinfachung sind in Fig. 5 (stark vergrößert) vier Faserlagen mit quer zueinanderliegenden Fasern (110 bzw. 120) im Querschnitt dargestellt. Die Grundfaserstränge (110 und 120) sind aus Elementarfäden (140) gesponnene Garne. In den in Fig. 4 und 5 dargestellten Ausführungen werden im Wickelprozeß drei Grundfasern gleichzeitig gewickelt, so daß sie in einer Lage nebeneinander mit dem entsprechenden Abstand (150) zu liegen kommen. Die Quergrundfasern (120) legen sich jeweils in den verschiedenen Lagen auf die Längsfasern (110) und bilden dabei Porenkammern (200), wie es in der linken Hälfte der Fig. 5 dargestellt ist. In Übergangsbereichen (210) erfolgt ein Lagenwechsel zwischen Fasern unterschiedlicher Orientierung. In diesen Bereichen, den sogenannten Knotenstellen (210) reduzieren sich die Faserabstände verschiedener Lagen, so daß die Bildung von Porenkammern gewissermaßen gehindert wird. Es ist daher zweckmäßig, möglichst viele Fasern gleichzeitig beim Wickelprozeß zu führen, um die Knotenpunkte (210) zu reduzieren.

Das Abgas (220) wird auf diese Weise durch das lockere Geflecht unter zahlreichen Umlenkungen durchströmen und die Partikel zum Teil mit in das Innere des Filters (100) mitreißen. Im Verlauf des Strömungsweges durch den Filter (100) treffen die Partikel nacheinander auf Fasern (110 bis 130) und lagern sich dort ab. Die Filtrierung erfolgt daher hier nicht an der Oberfläche des Filters, sondern das gesamte Volumen bzw. die Summe der Oberflächen der Fasern (110 bis 130) bzw. der Elementarfäden (140) trägt zur Filtrierung der Gaspartikel bei.

Um die Ablagerung der Partikel möglichst homogen im gesamten Filter (100) zu verteilen, muß für ein homogenes Netzwerk der Fasern im gesamten Filtervolumen gesorgt werden. Nachdem die Grundfasern (110 und 120) den wesentlichen Anteil der Filterwirkung ausmachen, werden diese in einer symmetrischen Form gewickelt, während die Hilfsfasern (130) innerhalb der Lücken (150) gelegt werden.

Die Möglichkeiten, die Hilfsfasern (130) im Filter zu integrieren, sind vielseitig. Diese können homogen im Wickelkörper integriert sein oder auch verstärkt in einer Filterebene oder an den Oberflächen des Filters angebracht sein.

In Fig. 6 ist bei einem rohrförmigen Filter - (101) eine Ausführung gezeigt, bei der die Hilfsfasern (131) am Innenumfang und am Außenumfang des Rohrkörpers angeordnet sind, während der Innenbereich des Filterrohres (101) nur Grundfasern (111, 121) enthält.

Die Hilfsfasern (131) sind gemäß Fig. 6 zu Netzwerken (300) verarbeitet. In diesem Fall dienen die Hilfsfasern am Außenumfang nicht nur als Filtermaterial und zur Versteifung des Wickelkörpers, sondern auch zum Schutz und zur Verankerung der Oberflächengrundfasern. Insbesondere bei spröden und sehr dünnen Grundfasern (111, 121) können diese durch Hantierung usw., insbesondere an der Oberfläche des Wickelkörpers leicht reißen.

Die Umfangshilfsfasern (131), die auch gewickelt sein können, stellen keine Barriere, sondern vielmehr ein Filterteil dar. Bei Bedarf können zusätzlich Hilfsfasern im Grundfaser-Wickelkörper vorgesehen werden, etwa in der Art wie in Fig. 4 dargestellt.

Filter der hier beschriebenen Art sind richtungsunabhängig, so daß ein einheitlicher Filter für beide Gasströmungsrichtungen hergestellt werden kann. Beim rohrförmigen Filter (101) ist die Filterwirkung beispielsweise die gleiche, gleichgültig ob das Gas von innen nach außen oder von außen nach innen des Filterrohres (101) gerichtet wird.

**Ansprüche**

1. Partikelfilter für Abgase, bestehend aus einem Wickelkörper aus temperaturbeständigen Fasern, dadurch gekennzeichnet, daß der Filter (10, 101) aus Grundfasern (11, 12, 110 bzw. 111, 121), die im wesentlichen für die Filterwirkung verantwortlich sind und aus Hilfsfasern (13, 130 bzw. 131) besteht, die zur Versteifung des Wickelkörpers dienen.

2. Filter nach Anspruch 1, dadurch gekennzeichnet, daß die Grundfasern (11, 12) Rovings oder Garne aus Keramik, Glas oder anderen hochtemperaturfesten Materialien sind.

3. Filter nach Anspruch 2, dadurch gekennzeichnet, daß die Grundfasern (11, 12) aus mehreren Elementarfäden (14) von unter 100 µm, vorzugsweise unter 10 µm Dicke bestehen.

4. Filter nach einem der vorhergehenden Ansprüche, dadurch gekennzeichnet, daß die Hilfsfasern (14, 140) aus hochtemperaturfesten Metallen, insbesondere Stahldraht bestehen.

5. Filter nach Anspruch 4, dadurch gekennzeichnet, daß die Hilfsfasern (14, 140) aus 0,1 bis 0,7 mm dickem Stahldraht oder Draht aus einem anderen hochtemperaturfesten Metall bestehen.

6. Filter nach einem der vorhergehenden Ansprüche, dadurch gekennzeichnet, daß der Filterkörper (10) mit Hilfsfasern durchsetzt ist.

7. Filter nach einem der vorhergehenden Ansprüche, dadurch gekennzeichnet, daß Hilfsfasern - (131) sich im wesentlichen an den Oberflächen des Filterkörpers (101) befinden.

8. Filter nach Anspruch 7, dadurch gekennzeichnet, daß die Hilfsfasern (131) zu einem Netzwerk (30) verstrickt sind.

9. Filter nach einem der vorhergehenden Ansprüche, dadurch gekennzeichnet, daß die Fasern (11 bis 13) im Wickelkörper (10) in sich kreuzenden Lagen gewickelt sind.

10. Filter nach Anspruch 9, dadurch gekennzeichnet, daß die Grundfasern (11, 12) im Filter (10) möglichst wenig Verknotungen (21) aufweisen.

11. Filter nach Anspruch 9 oder 10, dadurch gekennzeichnet, daß der Filter (10) durch loses Wickeln der Grundfasern (11, 12) eine lockere Struktur hat.

12. Verfahren zum Wickeln von Partikelfiltern für Abgase nach Anspruch 1, bei dem die Fasern um eine lösbare Wickelhilfe gewickelt werden, dadurch gekennzeichnet, daß die Fasern (11, 20) so geführt werden, daß der Wickelkörper (23) eine für eine Tiefenfilterwirkung erforderliche Porosität (21) aufweist, daß mehrere Faserstränge (11) gleichzeitig und mit Abstand (13) zueinander in Kreuzlagen (15) gewickelt werden, daß Fasern verschiedener Lagen (15) gleicher Orientierung auf Lücke (16) gewickelt werden und daß die Faserstränge (32, 34) mit einem Ringfadenauge (30) geführt werden.

13. Verfahren nach Anspruch 1 oder 2, dadurch gekennzeichnet, daß die Grundfasern (11, 18) lose gewickelt werden.

14. Verfahren nach einem der vorhergehenden Ansprüche, dadurch gekennzeichnet, daß die Faserstränge der Grundfasern Rovings (11) oder Garne (20) aus sehr dünnen Elementarfäden (18 bzw. 24) sind.

Fig 1

Fig. 2

Fig.3

0 230 579

Fig.4

0 230 579

Fig.5

Fig. 6

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | WO-A-8 000 419 (BRUNSWICK CORP.)<br><br>* Seite 4, Zeilen 16-36; Seite 5, Zeile 31 - Seite 7, Zeile 2; Seite 7, Zeilen 14-26; Figuren 2,3,5; Ansprüche 1-3,15 * | 1,2,4, 6,9,11 ,13 | B 01 D 46/24<br>B 01 D 39/14 |
| | --- | | |
| A | DE-A-2 521 334 (INTERGLAS-TEXTIL GmbH) * Insgesamt * | 1,2,4, 6 | |
| | --- | | |
| A | US-A-3 828 934 (J.S. GREEN)<br><br>* Insgesamt * | 1,2,4, 6,9 | |
| | ----- | | |

| | RECHERCHIERTE SACHGEBIETE (Int. Cl.4) |
|---|---|
| | B 01 D 46/00<br>B 01 D 39/00 |

Der vorliegende Recherchenbericht wurde für alle Patentansprüche erstellt.

| Recherchenort | Abschlußdatum der Recherche | Prüfer |
|---|---|---|
| DEN HAAG | 14-04-1987 | POLESAK, H.F. |